(19) Europäisches Patentamt
European Patent Office
Office européen des brevets

(11) EP 1 696 257 B1

(12) **EUROPEAN PATENT SPECIFICATION**

(45) Date of publication and mention of the grant of the patent:
**21.11.2012 Bulletin 2012/47**

(21) Application number: **04820642.9**

(22) Date of filing: **24.11.2004**

(51) Int Cl.:
***G02B 1/04*** *(2006.01)* ***C08F 230/08*** *(2006.01)*
***C08F 212/14*** *(2006.01)* ***C08F 220/22*** *(2006.01)*
***C08L 43/04*** *(2006.01)* ***C08L 25/18*** *(2006.01)*

(86) International application number:
**PCT/JP2004/017393**

(87) International publication number:
**WO 2005/062108 (07.07.2005 Gazette 2005/27)**

(54) **CONTACT LENS MATERIAL**

KONTAKTLINSENMATERIAL

MATERIAU DE LENTILLE DE CONTACT

(84) Designated Contracting States:
**AT BE BG CH CY CZ DE DK EE ES FI FR GB GR HU IE IS IT LI LU MC NL PL PT RO SE SI SK TR**

(30) Priority: **19.12.2003 JP 2003423038**
**19.12.2003 JP 2003423039**

(43) Date of publication of application:
**30.08.2006 Bulletin 2006/35**

(73) Proprietor: **Menicon Co., Ltd.**
**Nagoya-shi, Aichi 460-0006 (JP)**

(72) Inventors:
- **MATSUMOTO, Masahiro**
**Kasugai-shi, Aichi 4870011 (JP)**
- **HASHIMOTO, Mimi**
**Kasugai-shi, Aichi 4860926 (JP)**

(74) Representative: **TBK**
**Bavariaring 4-6**
**80336 München (DE)**

(56) References cited:
**EP-A- 0 600 269** **EP-A- 0 729 041**
**JP-A- 7 013 109** **JP-A- 7 064 029**
**JP-A- 8 283 342** **JP-A- 8 304 746**
**JP-A- 11 133 201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 696 257 B1

## Description

TECHNICAL FIELD

The present invention relates to a contact lens (hereinafter, referred to as "CL") material. More specifically, the present invention relates to a CL material which has high oxygen permeability and high mechanical strength, at the same time, extremely small in an amount of unpolymerized monomers in the CL material and an amount of water absorption, and is excellent in the shape stability of a lens.

BACKGROUND ART

Generally, a CL material having oxygen permeability contains a silicone (meth)acrylate or silicone styrene as main components, and as other components, in order to impart contamination resistance, strength and wettability, a monomer adjusted with each objective performance is selected as a copolymerizing component and polymerized.
However, since the structure and characteristic of a polymerization part of each monomer are different in the case of the copolymerization in a multi-component system, it was fundamentally difficult to favorably copolymerize them, and experience and know-how were entrusted in many cases. Therefore, very long time and labor were required in order to proceed better copolymerization with excellent reproductivity and to complete as end products. Particularly when a hydrophilic monomer is selected as a copolymerizing component, the hydrophilic monomer has a polarity which is opposite to a silicone monomer of a main component, thus, it was extremely difficult to proceed excellent polymerization. In such system, it was necessary to be slowly polymerized over quite long time.
In order to apply wettability, the hydrophilic monomer is added, however, there is not so much effect of wettability due to the addition since a silicone having low surface free energy basically appears on the surface of a lens. In addition, oxygen permeability is impaired as a result of adding the hydrophilic monomer.
On the other hand, in order to stabilize the shape of CL, remaining components in a lens, particularly volatile components and elution components to an aqueous solvent must be suppressed as much as possible. Further, it is considered that a water absorption ratio of the lens material also involves. When a water absorption ratio is applied beyond necessity, the substitution phenomenon of water and remaining components in the lens is caused, and when a slight distortion remains in the material, it is considered that the distortion is eased by absorbing water and the deformation of the lens may be possibly accelerated.
JP-A-60-142324 describes an oxygen permeable hard CL material containing a polymer comprising at least one kind of silane having at most 15 Si atoms or styrene having a siloxane bond, or at least one kind of the silane and the styrene having the siloxane bond, a copolymer comprising a hydrophobic monomer and/or a hydrophilic monomer as the quality of a material.
However, there is a problem that since the CL material described in JP-A-60-142324 did not intend copolymerizability of the monomer components, excellent copolymerization could be not performed (the unpolymerized monomers are increased), or the monomer components were not well copolymerized if the monomer components were not very slowly polymerized by taking a long time. Specifically, when a siloxane-containing styrene monomer and the hydrophilic monomer are copolymerized (same as when hydrophobic monomers other than the siloxane-containing styrene monomer are included), polarity is opposite, and the structure and polymerization characteristic of a polymerization part are different, thereby, the polymerization reaction becomes incomplete when the polymerization is performed in a short time from several minutes to several hours, which causes a lot of unpolymerized monomers remaining in the copolymer. As a result, not only safety to eyes is concerned, but also there is a possibility that the CL shape may be changed by volatilization of the unpolymerized monomers and elution of the unpolymerized to a tear fluid and a preservation solution. Therefore, in the case of such combination, it is necessary to be slowly polymerized by taking a long time, which tales labor, and is no satisfactory in view of the manufacturing cost thereof.
Furthermore, the addition of the hydrophilic monomer causes not only lowering of oxygen permeability but also increase in an amount of water absorption ratio of the copolymer to accelerate the deformation of the lens shape as described above.
JP-A-6-27424 discloses that a CL material characterized in comprising a molecular weight of at most 700 and a volatile component of at most 3.5 % by weight, which is improved in dimensional stability and creep resistance.
However, in order to obtain such a CL, a silicone resin or CL material having the molecular weight of at most 700 and a volatile component of at most 5 % by weight is required to be irradiated with high energy radiation to reduce the volatile component to be at most 3.5 % by weight, and the process is very complicated, requires labor, and was not satisfied in view of the manufacturing cost thereof. Further, this technique performs a post-processing for removing components such as a volatile component (unpolymerized monomers) on the CL resin material resulted in having at most 5 % by weight after manufacturing the silicone resin to impart only dimensional stability and creep resistance, and the technique is not one for specifying the monomer components and the compounding ratio, or a polymerization method

to reduce the volatile component, and it does not intend the copolymerizability of the monomer components. As described above, the use of the hydrophilic monomer is considered to promote deformation of the lens shape, thus being unfavorable.

JP-A-11-326847 discloses a CL comprising a copolymer containing 20 to 70 parts by weight of a silicone monomer, having an amount of 10 to 50 % of a silicone atom as the first component and one radical polymerizable functional group in a molecule, 1 to 5 parts by weight of a monomer having at least 2 radical polymerizable functional groups in a molecule as the second component, and 30 to 70 parts by weight of alkyl(meth)acrylate, styrene, or alkyl styrene copolymerizable with them as the third component, in which the specific gravity at 36°C is 0.9 to 1.05, and the oxygen permeability coefficient is at least 40. However, the oxygen permeability coefficient of the CL is actually at most 120, and the oxygen permeability is not considered to be sufficient.

Further, such CL makes excellent in exchange of tear fluid at the time of wearing the CL by lowering a specific gravity, thereby objects of the CL is to decrease the burden to a cornea and to hydrophilize the surface of the lens by a surface graft polymerization, which is different form an object of the present invention.

As described above, an oxygen permeable CL material comprising silicone (meth)acrylate or silicone styrene as a main component, in the case of containing a multi-component material, particularly a hydrophilic monomer, was very complicated and required to take significant labor. Even when such a complicated process was performed, shape stability of the lens, the safety to eyes and oxygen permeability and the like were not satisfied.

Since the CL material comprising a copolymer obtained by polymerizing copolymerizing components containing a silicone-containing monomer is small in an amount of remaining unpolymerized monomers in the copolymer, has excellent oxygen permeability and low in a water absorption ratio, the CL material has excellent shape stability, mechanical strength and safety to eyes, and as a result, the present invention can achieve lowering of the manufacturing cost thereof.

In other present invention, even the copolymerization is performed in a short time within several hours, the amount of the unpolymerized monomers can be reduced to be low by combining a styrene monomer and a fluoro(meth) acrylate monomer and a crosslinking agent of a specific kind and compounding ratio, and adding no hydrophilic monomer. Thereby, the performance of each monomer such as oxygen permeability, mechanical strength and contamination resistance can be sufficiently exerted, furthermore, shape stability of the lens, safety to eyes and oxygen permeability are quite excellent, and as a result, lowering of the manufacturing cost can be achieved.

DISCLOSURE OF INVENTION

The present invention provides a CL material which has high oxygen permeability and high mechanical strength, and extremely small in an amount of remaining unpolymerized monomers in polymerization for several hours, at the same time low in a water absorption ratio and excellent in shape stability of a lens.

Namely, the present invention relates to a contact lens material comprising a copolymer obtained by polymerizing copolymerizing components containing a silicone-containing monomer represented by the general formula (I):

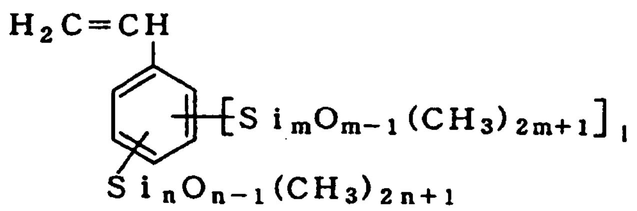

(I)

(wherein 1 is 0 or 1, and n and m are an integer of 1 to 15),
wherein the total residual amount of an unpolymerized monomer component remaining in the copolymer based on the copolymer is at most 3.5 % by weight,
an oxygen permeability coefficient of the copolymer is at least $130 \times 10^{-11}(cm^2/sec)\cdot(mLO_2)/(mL\cdot mmHg)$, and
a water absorption ratio of the copolymer is at most 0.3 % by weight.

The copolymer is preferably obtained by polymerizing monomer components essentially consisting of the silicone-containing monomer represented by the general formula (I) and alkyl (meth)acrylate, wherein an alkyl group has 1 to 6 carbon atoms and at least one hydrogen atom in the alkyl group is substituted with a fluoride atom, and a crosslinking agent.

The copolymer is preferably obtained by polymerizing copolymerizing components comprising 45 to 70 parts by weight of the silicone-containing monomer represented by the general formula (I), 20 to 45 parts by weight of the alkyl (meth)acrylate and 5 to 15 parts by weight of the crosslinking agent. In addition, these components are compounded in a total amount of 100 parts by weight.

The copolymer further preferably comprises an ultraviolet absorber and/or a colorant.

The copolymer is preferably obtained by polymerizing the monomer components and the crosslinking agent at 40 to 120°C for 30 minutes to 5 hours.

The present invention also relates to a contact lens material comprising a copolymer obtained by polymerizing monomer components essentially consisting of tris(trimethylsiloxy)silylstyrene and trifluoroethyl methacrylate, and a crosslinking agent, wherein the amount of tris(trimethylsiloxy)silylstyrene is 45 to 70 parts by weight, the amount of trifluoroethyl methacrylate is 20 to 45 parts by weight, and the amount of the crosslinking agent is 5 to 15 parts by weight.

The crosslinking agent is preferably ethylene glycol dimethacrylate and/or 4-vinylbenzyl methacrylate.

The copolymer further preferably comprises an ultraviolet absorber and/or a colorant.

The copolymer is preferably obtained by polymerizing the monomer components and the crosslinking agent at 40 to 120°C for 30 minutes to 5 hours.

Residues of an unpolymerized monomer components in the copolymer based on the copolymer is preferably at most 3.0 % by weight as for the tris(trimethylsiloxy)silylstyrene and at most 0.5 % by weight as for the trifluoroethyl methacrylate,
an oxygen permeability coefficient of the copolymer is preferably at least $130 \times 10^{-11}(cm^2/sec)\cdot(mLO_2)/(mL\cdot mmHg)$, and a water absorption ratio of the copolymer is preferably at most 0.3 % by weight.

Further, the present invention relates to a contact lens comprising the above-described contact lens material.

BEST MODE FOR CARRYING OUT THE INVENTION

The present invention relates to a CL material comprising a copolymer obtained by polymerizing copolymerizing components containing a silicone-containing monomer represented by the general formula (I):

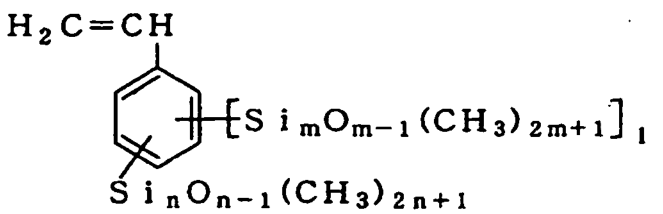

(I)

(wherein 1 is 0 or 1, and n and m are an integer of 1 to 15).

The silicone-containing monomer is a component, which improves oxygen permeability.

As specific examples of the silicone-containing monomer, various ones exist according to a structure of a silane or siloxane bonding part, however, an example of the silicone-containing monomers used in the present invention is a compound represented by the general formula (I).

In the compound represented by the general formula (I), it is preferable that 1 is 0 rather than 1 since the compound is easily synthesized and stabilized, and as n and m are larger, the compound becomes soft and brittle. When n and m are 1 to 5, a CL material having particularly preferable oxygen permeability, excellent hardness and rigidity, and a high refractive index can be obtained.

Although the siloxane bonding part in the compound represented by the general formula (I) can be used for any siloxane bond of a linear chain or a branched chain, the compound having a branched chain is preferable due to having higher rigidity than one having a linear chain.

Representative examples of the compound represented by the general formula (I) are trimethylsilylstyrene, pentamethyldisiloxanylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, bis(trimethylsiloxy)methylsilylstyrene, tris(trimethylsiloxy)silylstyrene, trimethylsiloxy-pentamethyldisiloxy-methylsilyl styrene, tris(pentamethyldisiloxy)silylstyrene, (tris-trimethylsiloxy)siloxanyl-bis(trimethylsiloxy)silylstyrene, bis(heptamethyltrisiloxy)methylsilylstyrene, tris(methylbis-trimethylsiloxy-siloxy)silylstyrene, trimethylsiloxy-bis(tris-trimethylsiloxy-siloxy)silylstyrene, heptakis(trimethylsiloxy)trisiloxanylstyrene, nonamethyltetrasiloxy-undecylpentasiloxy-methylsilylstyrene, tris(tris-trimethylsiloxy-siloxy)silylstyrene, (tristrimethylsiloxy-hexamethyl)tetrasiloxy-(tris-trimethylsiloxy)siloxy-tri methylsiloxysilylstyrene, and nomekis(trimethylsiloxy)tetrasiloxanylstyrene, bis(tridecamethylhexasiloxy)methylsilylstyrene. These are used alone or in combination of at least two kinds thereof.

In order to improve oxygen permeability, mechanical strength, processability and a refractive index among the representative examples, for example, trimethylsilylstyrene represented by the formula:

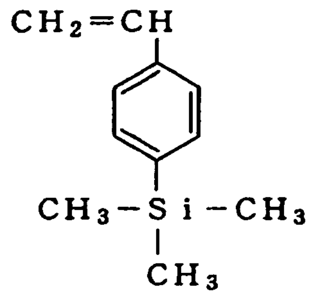

(l=0、n=1)

bis(trimethylsiloxy)methylsilylstyrene represented by the formula:

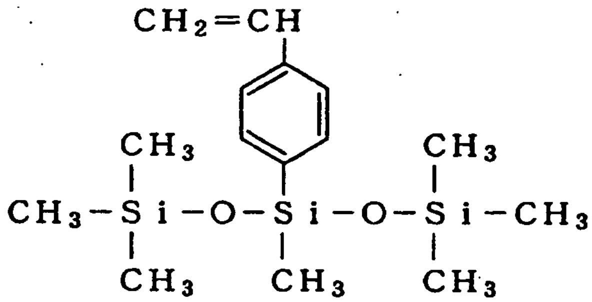

(l=0、n=3)

and tris(trimethylsiloxy)silylstyrene represented by the formula:

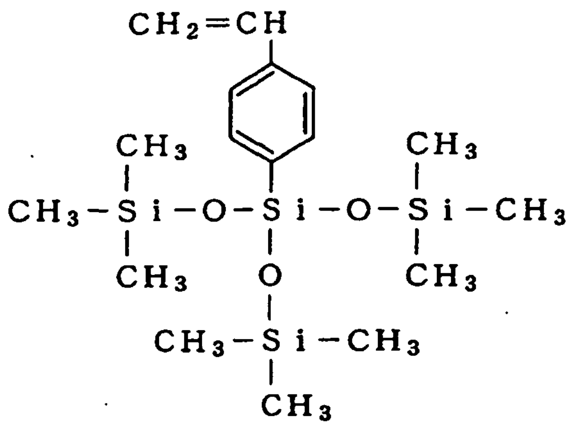

(l=0、n=4)

are preferable, and among those, tris(trimethylsiloxy)silylstyrene is particularly preferable.

The copolymer in the present invention is preferably obtained by polymerizing monomer components essentially consisting of a silicone-containing monomer represented by the general formula (I) and alkyl(meth)acrylate in which an alkyl group has 1 to 6 carbon atoms and at least one hydrogen atom of the alkyl group is substituted with a fluorine atom, and the crosslinking agent.

Herein, "monomer component" refers to two components, which are a silicone-containing monomer represented by the general formula (I) and alkyl(meth)acrylate in which the alkyl group has 1 to 6 carbon atoms and at least one hydrogen atom of the alkyl group is substituted with a fluorine atom, and components other than those monomer components (polymerizable and non-polymerizable ultraviolet absorbers, a colorant, a polymerization initiator and other polymerizable monomers) do not correspond to the monomer component referred in the present invention.

Further, "substantially" means that other polymerizable monomers (except for the polymerizable and non-polymerizable ultraviolet absorbers, the colorant and the polymerization initiator) other than the monomer components may be contained so that properties of the monomer components can be sufficiently exerted, specifically, other polymerizable monomers may be contained in an amount of at most 10 parts by weight, and preferably at most 5 parts by weight based on 100 parts by weight of a mixture of the monomer components, a crosslinking agent and other polymerizable monomers in the mixture of the monomer components and the crosslinking agent. When the other polymerizable monomer other than the monomer components is used more than 10 parts by weight, an amount of the unpolymerized monomers is increased by lowering copolymerizability, thereby, shape stability is deteriorated and, further, safety thereof tends to be inferior and oxygen permeability also tends to be lowered.

Herein, "...(meth)acrylate" generically indicates two compounds of "...acrylate" and "...methacrylate".

Specific examples of the other polymerizable monomers are an alkyl ester of methacrylic acid or acrylic acid such as methyl(meth)acrylate, ethyl(meth)acrylate, isopropyl(meth)acrylate, tert-butyl(meth)acrylate, isobutyl(meth)acrylate, tert-amyl(meth)acrylate, 2-ethyl hexyl(meth)acrylate, lauryl(meth)acrylate and cyclohexyl(meth)acrylate; a styryl compound such as styrene, p-methylstyrene, m-methylstylene, p-tert-butylstyrene, m-tert-butylstyrene, p-1,1,3, 3-tetramethyl butylstyrene; an alkyl ester of itaconic acid or crotonic acid; and glycidyl(meth)acrylate; tetrahydrofurfuryl(meth) acrylate; and benzyl(meth)acrylate.

Alkyl(meth)acrylate in which an alkyl group has 1 to 6 carbon atoms and at least one hydrogen atom in this alkyl group is substituted with a fluorine atom is a component for improving contamination resistance and processability while maintaining oxygen permeability.

Specific examples of alkyl(meth)acrylate in which the above alkyl group has 1 to 6 carbon atoms and at least one hydrogen atom in this alkyl group is substituted with a fluorine atom are 2,2,2-trifluoroethyl(meth)acrylate, 2,2,3,3-tetrafluoropropyl(meth)acrylate, 2,2,3,3,3-pentafluoropropyl(meth)acrylate, hexafluoroisopropyl(meth)acrylate, 2,2,3,3-tetrafluoro-tert-amyl(meth)acrylate, 2,2,3,4,4,4-hexafluorobutyl(meth)acrylate, 2,2,3,4,4,4-hexafluoro-tert-hexyl(meth) acrylate, and 2,2,3,3,4,4,5,5-octafluoropentyl(meth)acrylate. These are used alone or in combination of at least two kinds thereof. Among those, in order to make processability and copolymerizability with the silicone-containing monomer represented by the general formula (I), 2,2,2-trifluoroethylmethacrylate, hexafluoroisopropylmethacrylate, 2,2,3,3-tetrafluoropropylmethacrylate, 2,2,3,3,3-pentafluoropropylmethacrylate are preferable, and 2,2,2-trifluoroethylmethacrylate is particularly preferable.

Specific examples of the crosslinking agents are ethylene glycol di(meth)acrylate, butanediol di(meth)acrylate, diethylene glycol di(meth)acrylate, triethylene glycol di(meth)acrylate, propylene glycol di(meth)acrylate, dipropylene glycol di(meth)acrylate, diallylfumarate, allyl(meth)acrylate, vinyl(meth)acrylate, trimethylolpropane tri(meth)acrylate, methacryloyloxyethyl (meth)acrylate, divinylbenzene, diallylphthalate, diallyladipate, triallyldiisocyanate, a-methylene-N-vinylpyrrolidone, 4-vinylbenzyl(meth)acrylate, 3-vinylbenzyl(meth)acrylate, 2,2-bis((meth)acryloyloxyphenyl)hexafluoropropane, 2,2-bis((meth)acryloyloxyphenyl)propane, 1,4-bis(2-(meth)acryloyloxyhexafluoroisopropyl)benzene, 1,3-bis (2-(meth)acryloyloxyhexafluoroisopropyl)benzene, 1,2-bis (2-(meth)acryloyloxyhexafluoroisopropyl)benzene, 1,4-bis(2-(meth)acryloyloxyisopropyl)benzene, 1,3-bis(2-(meth)acryloyloxyisopropyl)benzene, and 1,2-bis (2-(meth) acryloyloxyisopropyl)benzene. These may be used alone or in combination of at least two kinds thereof. Among those, ethylene glycol dimethacrylate and the 4-vinylbenzyl methacrylate are particularly preferable from the viewpoint of imparting favorable mechanical strength, processability, hardness, strength and solvent resistance, and having an effect of improving copolymerizability.

When the copolymer is obtained by polymerizing the monomer components and the crosslinking agent, the compounding amount of the silicone-containing monomer in the mixture of the monomer components and the crosslinking agent is preferably 45 to 70 parts by weight, more preferably 50 to 65 parts by weight, and further more preferably 50 to 60 parts by weight. When the compounding amount is less than 45 parts by weight, oxygen permeability tends to be lowered. On the other hand, when the compounding amount is more than 70 parts by weight, although the oxygen permeability is improved, the obtained copolymer becomes brittle and processability is lowered, also, lowering of solvent resistance, and a defect such that material surfaces are extremely subjective to flaws is caused, and furthermore, the amount of the unpolymerized monomers of the silicone-containing monomer is increased, which tends to affect on the shape stability of the CL.

The compounding amount of alkyl(meth)acrylate in a mixture of the monomer components and the crosslinking agent is preferably 20 to 45 parts by weight and more preferably 25 to 40 parts by weight. When the compounding amount is less than 20 parts by weight, contamination resistance and processability tend to be lowered. On the other hand, when the compounding amount is more than 45 parts by weight, due to lowering of a relative amount of silicon atoms in the copolymer to be obtained, oxygen permeability is lowered, and further, an amount of the unpolymerized monomers of alkyl(meth)acrylate is increased, which tends to affect on shape stability of a CL.

The compounding amount of the crosslinking agent in the mixture of the monomer components and the crosslinking agent is preferably 5 to 15 parts by weight. When the compounding amount is less than 5 parts by weight, there are tendencies that processability is deteriorated, flaws are easily formed, solvent resistance is lowered, and the amount of

unpolymerized monomers of the monomer components is increased. On the other hand, when the compounding amount is more than 15 parts by weight, a copolymer tends to become brittle.

Furthermore, the CL material of the present invention has high oxygen permeability and high mechanical strength, at the same time, extremely small in an amount of unpolymerized monomers in the CL material and a water absorption ratio, and excellent in shape stability.

In the CL material of the present invention, it is preferable that the total residual amount of the unpolymerized monomer components remaining in the copolymer based on the copolymer is at most 3.5 % by weight, and an oxygen permeability coefficient of the copolymer is at least 130 $\times$ $10^{-11}$($cm^2$/sec)·($mLO_2$)/(mL·mmHg), and a water absorption ratio of the copolymer is at most 0.3 % by weight.

In the CL material of the present invention, the residual amount of the unpolymerized monomer components remaining in the copolymer based on the copolymer is preferably at most 3.5 % by weight, and more preferably at most 2.5 % by weight, and further more preferably at most 2.0 % by weight. When the residual amount is more than 3.5 % by weight, processability and shape stability tend to be inferior.

The oxygen permeability coefficient (Dk) of the copolymer is preferably at least 130 $\times$ $10^{-11}$($cm^2$/sec)·($mLO_2$) /(mL·mmHg), and more preferably at least 140 $\times$ $10^{-11}$($cm^2$/sec)·($mLO_2$)/(mL·mmHg). When Dk is less than 130 $\times$ $10^{-11}$ ($cm^2$/sec)·($mLO_2$)/(mL·mmHg), an amount of oxygen supply to eyes at the time of wearing a lens on the eyes is not sufficient, and safety tends to be inferior. When the copolymer having low oxygen permeability coefficient is used as a CL material, it becomes difficult to sufficiently supply oxygen required for a cornea via a lens from a cornea surface, and when the lens is continuously worn for a long time, the physiological burden on the cornea tends to be increased.

The water absorption ratio of the copolymer is preferably at most 0.3 % by weight, and more preferably at most 0.2 % by weight, and further more preferably at most 0.1 % by weight. The water absorption ratio is more than 0.3 % by weight, which tends to lead to lowering of shape stability.

As for residues of the unpolymerized monomer components remaining in the copolymer based on the copolymer, in a system which contains the silicone-containing monomer represented by the general formula (I) and the alkyl(meth) acrylate, the residual amount of the silicone-containing monomer based on the copolymer is preferably at most 0.3 % by weight, and more preferably at most 2.0 % by weight, and the residual amount of alkyl(meth)acrylate based on the copolymer is preferably at most 0.5 % by weight, and more preferably at most 0.3 % by weight. When the residual amount of the silicone-containing monomer is more than 3.0 % by weight, there are tendencies that processability is lowered and shape stability is inferior. When the residual amount of alkyl(meth)acrylate is more than 0.5 % by weight, there are tendencies that hardness is remarkably lowered, processability is deteriorated, and also the shape is unstable by causing deformation due to volatilization from the CL material.

By satisfying the property values (the residual amount of the remaining unpolymerized monomer components, the oxygen permeability coefficient, the water absorption ratio)of the copolymer used as a CL material, the CL material of the present invention has high oxygen permeability and high mechanical strength, at the same time, extremely small in an amount of the unpolymerized monomers in the CL material and a water absorption ratio, and excellent in the shape stability.

According to the present invention, the polymerizability of the silicone-containing monomer and alkyl(meth) acrylate is excellent by particularly using no hydrophilic monomer, and as a result, a phenomenon in which an amount of the unpolymerized monomers is remarkably increased can be advantageously avoided. Since an water absorption ratio can be suppressed to be low, shape stability of a CL is excellent due to a synergetic effect with reduction of the amount of the unpolymerized monomers, and in addition, the lowering of an oxygen permeability coefficient can be also suppressed.

In the present invention, it is also possible to polymerize various kinds of additives conventionally and generally used for the CL material, for example, a polymerizable or non-polymerizable ultraviolet absorber, a colorant and an ultraviolet-absorbing colorant to impart ultraviolet absorbability to the CL material and to color the CL material existed in the copolymerizing components, or add the additives after the polymerization, if necessary.

In the present invention, copolymerization can be favorably carried out in a short time by polymerizing monomer components containing no hydrophilic monomer and essentially consisting of 45 to 70 parts by weight of tris(trimethylsiloxy)silylstyrene and 20 to 45 parts by weight of trifluoroethyl methacrylate, and 5 to 15 parts by weight of a crosslinking agent. Namely, the present invention is preferable from the viewpoint that the present invention can be polymerized in the state having a quite small amount of the unpolymerized monomers, the material absorbs no water, and further, oxygen permeability can be sufficiently exerted.

Examples of the ultraviolet absorbers are a benzophenone polymerizable ultraviolet absorber and a benzotriazole polymerizable ultraviolet absorber.

Examples of the benzophenone polymerizable ultraviolet absorber are 2-hydroxy-4-(meth)acryloyloxybenzophenone, 2-hydroxy-4-(meth)acryloyloxy-5-tert-butylbenzophenone, 2-hydroxy-4-(meth)acryloyloxy-2',4'-dichlorobenzophenone, and 2-hydroxy-4-(2'-hydroxy-3'-(meth)acryloyloxypropoxy)benzophenone.

Examples of the benzotriazole polymerizable ultraviolet absorber are 2-(5-chloro-2H-benzotriazole-2-yl)-6-(1,1-dimethylethyl)-4 -methylphenol, 2-(2'-hydroxy-5'-(meth)acryloyloxyethylphenyl)-2H-benzotriazole, 2-(2'-hydroxy-5'-(meth)acryloyloxyethylphenyl)-5-chloro-2H -benzotriazole, 2-(2'-hydroxy-5'-(meth)acryloyloxypropylphenyl)-2H-benzotriazole, and 2-(2'-hydroxy-5'-(meth)acryloyloxypropyl-3'-tert-butylphenyl)-5-chloro -2H-benzotriazole.

The polymerizable ultraviolet absorber which has a part of the same chemical structure as these ultraviolet absorbers, and has a functional group polymerizable with the polymerization components in the present invention can be also used. These may be used alone or in combination of at least two kinds thereof.

The colorant is not particularly limited except that safety thereof to a living body is required, and the colorants (non-polymerizable colorants and polymerizable colorants) used in fields such as food and pharmaceutical products are selected. Examples of the non-polymerizable colorants are 1,4-bis[(4-methylphenyl)amino]-9,10-anthraquinone (D&C Green No.6), 1-[[4-(phenylazo)phenyl]azo]-2-naphthalenol (D&C Red No. 17), 1-hydroxy-4-[(4-methylphenyl)amino]-9,10-anthraquinone (D&C Violet No.2), 2-(2-quinolyl)-1,3-indandione (D&C Yellow No.11), 4-[(2,4-dimethylphenyl)azo]-2,4-dihydro-5-methyl-2-phenyl-3H-pyrazol e-3-one (C. I Solvent Yellow 18), and 2-(1,3-dioxo-2-indanyl)-3-hydroxyquinoline (MACROLEX (trademark) Yellow-G).

Specific examples of the polymerizable colorants are an azo polymerizable colorant, an anthraquinone polymerizable colorant, a nitro polymerizable colorant, and a phthalocyanine polymerizable colorant.

Examples of the azo polymerizable colorants are 1-phenylazo-4-(meth)acryloyloxynaphthalene, 1-phenylazo-2-hydroxy-3-(meth)acryloyloxynaphthalene, 1-naphthylazo-2-hydroxy-3-(meth)acryloyloxynaphthalene, 1-(a-anthrylazo)-2-hydroxy-3-(meth)acryloyloxynaphthalene, 1-(4'-phenylazo)(phenyl)azo-2-hydroxy-3-(meth)acryloyloxynaphthalene, 1-(2',4'-xylylazo)-2-(meth)acryloyloxynaphthalene, 1-(o-tolylazo)-2-(meth)acryloyloxynaphthalene, 2-(m-(meth)acryloylamido-anilino)-4,6-bis(1'-(o-tolylazo)-2' -naphthylamino)-1,3,5-triazine, 3-(meth)acryloylamido-4-phenylazophenol, 3-(meth)acryloylamido-4-(8'-hydroxy-3',6'-disulfo-1'-naphthylazo) -phenol, 3-(meth)acryloylamido-4 -(1 '-phenylazo-2'-naphthylazo)-phenol, 3-(meth)acryloylamido-4-(p-tolylazo)phenol, 4-phenylazo-7-(meth)acryloylamido-1-naphthol, 2-(m-vinylanilino)-4-(p-nitrophenylazo)-anilino)-6-chloro-1,3,5-triazine, 2-(1-(o-tolylazo)-2'-naphthyloxy)-4-(m-vinylanilino)-6-chloro-1,3,5 -triazine, 2-(p-vinylanilino)-4-(1'-(o-tolylazo)-2'-naphthylamino)-6-chloro -1,3,5-triazine, N-(1'-(o-tolylazo)-2'-naphthyl)-3- vinyl phthalate monoamide, N-(1'-(o-tolylazo)-2'-naphthyl)-6-vinyl phthalate monoamide, a 3-vinyl phthalate-(4'-(p-sulfophenylazo)-1'-naphthyl)monoester, a 6-vinylphthate-(4'-(p- sulfophenylazo)-1'-naphthyl) monoester, 2-amino-4-(m-(2'-hydroxy-1'-naphthylazo)anilino)-6-isopropenyl -1,3,5-triazine, 2-anino-4-(N-methyl-p-(2'-hydroxy-1'-naphthylazo)anilino)-6 -isopropenyl-1,3,5-triazine, 2-amino-4-(m-(4'-hydroxy-1'-phenylazo)anilino)-6-isopropenyl-1,3,5 -triazine, 2-amino-4-(N-methyl-p-(4'-hydroxyphenylazo)anilino)-6-isopropenyl -1,3,5-triazine, 2-amino-4-(m-(3'-methyl-1'-phenyl-5'-hydroxy-4'-pyrazolylazo)anilino) -6-isopropenyl-1,3, 5-triazine, 2-amino-4-(N-methyl-p-(3'-methyl-1'-phenyl-5'-hydroxy-4' -pyrazolylazo)anilino)-6-isopropenyl-1,3,5- triazine, and 2-amino-4-(p-phenylazoanilino)-6-isopropenyl-1,3,5- triazine.

Examples of the anthraquinone polymerizable colorants are 1,5-bis((meth)acryloyl amino)-9,10-anthraquinone, 1-amino-4-(3'-(meth)acryloylaminophenylamino)-9,10-anthraquinone-2 -sulfonic acid, 2-(3'-(meth)acryloylamido-anilino)-4-(3'-(3"-sulfo-4" -aminoanthraquinone-1"-yl)-amino-anilino)-6-chloro-1,3,5-triazine, 2-(3'-(meth)acryloylamido-anilino)-4-(3'-(3"-sulfo-4" -aminoanthraquinone-1"-yl)-amido-anilino)-6-hydrazino-1,3,5-triazine, 1-(4'-vinylbenzoylamide)-9,10-anthraquinone, 4-amino-1-(4'-vinylbenzoylamido)-9,10-anthraquinone, 5-amino-1-(4'-vinylbenzoylamido)-9,10-anthraquinone, 8-amino-1-(4'-vinylbenzoylamido)-9,10-anthraquinone, 4-nitro-1-(4'-vinylbenzoylamido)-9,10-anthraquinone, 4-hydroxy-1-(4'-vinylbenzoylamido)-9,10-anthraquinone, 1-(3'-vinylbenzoylamido)-9,10-anthraquinone, 1-(2'-vinylbenzoylamido)-9, 10-anthraquinone, 1-(4'-isopropenylbenzoylamido)-9,10-anthraquinone, 1-(3'-isopropenylbenzoylamido)-9,10-anthraquinone, 1-(2'-isopropenylbenzoylamido)-9,10-anthraquinone, 1,4-bis-(4'-vinylbenzoylamido)-9,10-anthraquinone, 1,4-bis-(4'-isopropenylbenzoylamido)-9,10-anthraquinone, 1,5-bis-(4'-vinylbenzoylamido)-9,10-anthraquinone, 1,5-bis-(4'-isopropenylbenzoylamido)-9,10-anthraquinone, 1-methylamino-4-(3'-vinylbenzoylamido)-9,10-anthraquinone, 1-methylamino-4-(4'-vinylbenzoyloxyethylamino)-9,10-anthraquinone, 1-amino-4-(3'-vinylphenylamino)-9,10-anthraquinone-2-sulfonic acid, 1-amino-4-(4'-vinylphenylamino)-9,10-anthraquinone-2-sulfonic acid, 1-amino-4-(2'-vinylbenzylamino)-9,10-anthraquinone-2-sulfonic acid, 1-(β-ethoxycarbonylallylamino)-9,10-anthraquinone, 1-(β-carboxyallylamino)-9,10-anthraquinone, 1,5-di(β-carboxyallylamino)-9, 10-anthraquinone, 1-(β-isopropoxycarbonylallylamino)-5-benzoylamido-9,10 -anthraquinone, 2,4-bis-(4"-methoxyanthraquinone-1"-yl)-amino)-6-(3'-vinylanilino) -1,3,5-triazine, and 2-(2'-vinylphenoxy)-4-(4'-(3"-sulfo-4"-aminoanthraquinone-1"-yl-amino) -anilino)-6-chloro-1,3,5-triazine.

An example of the nitro polymerizable colorants is o-nitroanilinomethyl(meth)acrylate.

Examples of the phthalocyanine polymerizable colorants are (meth)acryloylated tetraamino copper phthalocyanine and (meth)acryloylated (dodecanoylated tetraamino copper phthalocyanine).

Examples of the polymerizable ultraviolet-absorbing colorants are
2,4-dihydroxy-3-(p-(meth)acryloyloxymethylphenylazo)benzophenone,
2,4-dihydroxy-5-(p-(meth)acryloyloxymethylphenylazo)benzophenone,
2,4-dihydroxy-3-(p-(meth)acryloyloxyethylphenylazo)benzophenone,
2,4-dihydroxy-5-(p-(meth)acryloyloxyethylphenylazo)benzophenone,

2,4-dihydroxy-3-(p-(meth)acryloyloxypropylphenylazo)benzophenone,
2,4-dihydroxy-5-(p-(meth)acryloyloxypropylphenylazo)benzophenone,
2,4-dihydroxy-3-(o-(meth)acryloyloxymethylphenylazo)benzophenone,
2,4-dihydroxy-5-(o-(meth)acryloyloxymethylphenylazo)benzophenone,
2,4-dihydroxy-3-(o-(meth)acryloyloxyethylphenylazo)benzophenone,
2,4-dihydroxy-5-(o-(meth)acryloyloxyethylphenylazo)benzophenone,
2,4-dihydroxy-3-(o-(meth)acryloyloxypropylphenylazo)benzophenone,
2,4-dihydroxy-5-(o-(meth)acryloyloxypropylphenylazo)benzophenone,
2,4-dihydroxy-3-(p-(N,N-di(meth)acryloyloxyethylamino)phenylazo) benzophenone,
2,4-dihydroxy-5-(p-N,N-di(meth)acryloyloxyethylamino)phenylazo) benzophenone,
2,4-dihydroxy-3-(o-N,N-di(meth)acryloyloxyethylamino)phenylazo) benzophenone,
2,4-dihydroxy-5-(o-(N,N-di(meth)acryloyloxyethylamino)phenylazo) benzophenone,
2,4-dihydroxy-3-(p-(N-ethyl-N-(meth)acryloyloxyethylamino)phenylazo) benzophenone,
2,4-dihydroxy-5-(p-(N-ethyl-N-(meth)acryloyloxyethylamino)phenylazo) benzophenone,
2,4-dihydroxy-3-(o-(N-ethyl-N-(meth)acryloyloxyethylamino)phenylazo) benzophenone,
2,4-dihydroxy-5-(o-(N-ethyl-N-(meth)acryloyloxyethylamino)phenylazo) benzophenone,
2,4-dihydroxy-3-(p-(N-ethyl-N-(meth)acryloylamino)phenylazo) benzophenone,
2,4-dihydroxy-5-(p-(N-ethyl-N-(meth)acryloylamino)phenylazo) benzophenone,
2,4-dihydroxy-3-(o-(N-ethyl-N-(meth)acryloylamino)phenylazo) benzophenone,
2,4-dihydroxy-5-(o-(N-ethyl-N-(meth)acryloylamino)phenylazo) benzophenone,
2,4-dihydroxy-3-(p-styrenoazo) benzophenone, 2,4-dihydroxy-5-(p-styrenoazo)benzophenone, and
phenyl 2-hydroxy-4-(p-styrenoazo) benzoate. These may be used alone or in combination of at least two kinds thereof.

As for amounts of the monomer components and the crosslinking agent in a mixture, based on 100 parts by weight of the mixture of the monomer components, crosslinking agent and other polymerizable monomers, the ultraviolet absorber is generally 0.01 to 1 part by weight, considering such that the monomer components and the crosslinking agent in the mixture are largely affected by a thickness of the material. It is preferable that the colorant and the ultraviolet-absorbing colorant is 0.001 to 0.1 part by weight, however, the amount may be suitably adjusted according to the use of the desired CL material.

Excessive amounts of the ultraviolet absorber and the colorant may cause lowering of mechanical strength of the CL material and also reduction in transparency. Furthermore, when the CL material is used by being brought into contact with a living tissue, amounts of the ultraviolet absorber, the colorant and the ultraviolet-absorbing colorant must be adjusted while the toxicity thereof is also taken into consideration.

The copolymer to be the CL material of the present invention can be obtained by polymerizing the mixture of the monomer components and the crosslinking agent at 40 to 120°C for 30 minutes to 5 hours. This is because excellent polymerization can be attained in a short time by substantially selecting and using the monomer components having excellent copolymerizability.

It is preferable that a polymerization temperature is suitably adjusted within the range from 40 to 120°C and is risen in the middle of polymerization. Since the polymerization is not completed or it takes a long time to polymerize in the polymerization reaction at a constant temperature in the low temperature range of 40 to 50°C, it is required to raise the temperature. For example, when the initial temperature is set at 40 to 60°C, the preliminary polymerization is performed at this temperature for 1 to 4 hours, then the temperature is then raised at 80 to 120°C to heat for 10 to 60 minutes, and the polymerization reaction can be completed. When the preliminary polymerization is not performed and the polymerization reaction is performed at least 70°C from the start, a polymerization time is preferably within 3 hours. In the case of the preliminary polymerization at the initial temperature of at most 40°C, the polymerization reaction proceeds slowly, and it tends to take a long time to complete the polymerization reaction. At the polymerization temperature is more than 120°C, the polymerization reaction goes out of control, and unpolymerized monomers tends to be increased.

The polymerization time is preferably 30 minutes to 5 hours. When the polymerization time is less than 30 minutes, the polymerization tends to be incomplete (the unpolymerized monomers are increased). When the polymerization time is longer than 5 hours, the manufacturing time becomes longer, and as a result, the cost thereof tends to be high.

In order to remove the distortion of the obtained copolymer, the copolymer may be further heated for about 1 hour under the temperature condition of at least the glass transition temperature of the copolymer.

At the time of copolymerization of the monomer components, various kinds of conventionally known radical polymerization initiators and photoinitiators can be suitably selected and used.

Examples of the radical polymerization initiators are azobisisobutyronitrile, azobisdimethylvaleronitrile, benzoyl peroxide, tert-buthyl hydroperoxide, and cumenehydroperoxide. These may be used alone or in combination of at least two kinds thereof.

An amount to be added is 0.001 to 2 parts by weight, and more preferably 0.01 to 1 part by weight based on

100 parts by weight of the mixture of the monomer components, crosslinking agent and other polymerizable monomers.

Examples of the photoinitiators are benzoin photoinitiators such as methylorthobenzoylbenzoate, methylbenzoylformate, a benzoin methyl ether, a benzoin ethyl ether, a benzoin isopropyl ether, a benzoin isobutyl ether and a benzoin-n-butyl ether; phenone photoinitiators such as 2-hydroxy-2-methyl-1-phenylpropane-1-one, p-isopropyl-$\alpha$-hydroxyisobuthylphenone, p-tert-buthyltrichloroacetophenone, 2,2-dimethoxy-2-phenylacetophenone, a,a-dichloro-4-phenoxyacetophenone, and N,N-tetraethyl-4,4-diaminobenzophenone; 1-hydroxycyclohexyl phenyl ketone; 1-phenyl-1,2-propanedione-2-(o-ethoxycarbonyl)oxime; thioxanthone photoinitiators such as 2-chlorothioxanthone and 2-methylthioxanthone; 2-ethylanthraquinone; benzophenone acrylate; benzophenone; and benzyl. These may be used alone or in combination of at least two kinds thereof.

An amount to be added is 0 to 2 parts by weight, more preferably 0.001 to 2 parts by weight, and further more preferably 0.01 to 1 part by weight based on 100 parts by weight of the mixture of the monomer component, crosslinking agent and other polymerizable monomer.

In the case of irradiating the electron rays in the photopolymerization, the monomer components can be polymerized even if the photoinitiator is not added.

Since the obtained CL material substantially consists of a hydrophobic component, the lens surface has water repellency. Therefore, in order to impart wettability to the lens surface, some surface treatments are necessary, such as the graft polymerization or coating of the hydrophilic monomer on the lens surface, a plasma treatment using various gases, and the combination use of the plasma and the graft polymerization.

Among those, a plasma treatment with an oxygen gas (for example, a plasma treatment equipment: manufactured by Kyoto Denshi Kesoku Inc., a plasma asher PA-102AT, conditions: 40W-2 minutes, oxygen gas atmosphere, vacuum degree: 0.8 Torr) is preferable as a process of simply and uniformly imparting wettability on the lens surface.

Hereinafter, the present invention is explained in detail based on examples.

## EXAMPLES

### EXAMPLE 1

45 parts by weight of tris(trimethylsiloxy)silylstyrene (hereinafter, referred to as TMSiSt), 45 parts by weight of trifluoroethyl methacrylate (hereinafter, referred to as 3FEMA), and 10 parts by weight of ethylene glycol dimethacrylate (hereinafter, referred to as EDMA) were mixed. To 100 parts by weight of the obtained mixture, 0.3 part by weight of 2,2'-azobis(2,4-dimethylvaleronitrile) (hereinafter, referred to as V-65) is added to the obtained mixture as a polymerization initiator based on 100 parts by weight of this mixture, and the mixture was well stirred to be blended.

The mixture was injected into a mold made of polypropylene (diameter: 12 mm, depth: 5 mm), and the mold was covered with a PET (polyethylene terephthalate) film and sealed. After the mixture was preliminarily polymerized in a circulation drier charging with a nitrogen atmosphere at 50°C for 2 hours, the temperature was raised at 90°C, and the mixture was kept with heating for t for 30 minutes to complete the polymerization (polymerization condition A).

The obtained copolymer in a state of a button shape was processed with cutting to prepare test pieces for measuring various properties. The properties of the test pieces were measured according to the following methods. Results are shown in Table 1.

### EXAMPLES 2 to 9

Copolymers were prepared in the same manner as Example 1 except for changing the compositions thereof as shown in Table 1, and processed with cutting, and the properties of the obtained test pieces were measured according to the following methods. Results are shown in Table 1.

### COMPARATIVE EXAMPLES 1 to 2 and 4 to 5

Copolymers were prepared in the same manner as Example 1 except for changing the compositions thereof as shown in Table 1, and processed with cutting, and the properties of the obtained test pieces were measured according to the following methods. Results are shown in Table 1.

### COMPARATIVE EXAMPLE 3

The copolymerizing components compounded according to Table 1 was injected into a glass test tube, after replacing a gas in the test tube with nitrogen, the test tube was sealed and put into a circulation thermostatic water bath. After the copolymerizing components were preliminarily polymerized at 35°C for 40 hours, a temperature was raised at 50°C, and kept with heating for 8 hours. Then, in a circulation type thermostatic dryer, the copolymerizing components

were heated at a speed of increasing the temperature of 10°C/1.5 hours from 50 to 120°C to complete the polymerization (polymerization condition B).

The obtained copolymer was processed with cutting to prepare test pieces for measuring various properties. The properties of the test pieces were measured according to the following methods. Results are shown in Table 1.

Measurement of Properties

<Oxygen Permeability Coefficient (Dk)>

An oxygen permeability coefficient is measured at a temperature of 35°C for a measurement time of 2 minutes by using GTG(GAS to GAS) ANALYZER (manufactured by REHDERDEVELOPMENT COMPANY (U.S.)), and the obtained measured value is calculated by using Menicon EX (Dk value = 64) standardized in ISO 9912-2 to find a Dk value. The results are shown in Table 1. The Dk value indicates a value [($cm^2$/sec)·($mLO_2$/(mL·mmHg))] of an oxygen permeability coefficient, and a numerical value obtained by particularly multiplying the value of the oxygen permeability coefficient by $10^{-11}$.

<Water absorption ratio>

A set of ten test pieces (dried ones) having a thickness of 0.5 mm was prepared, and the weight (A [g]) was measured for every set, after immersing the set in a sample bottle containing distilled water at a temperature of 25°C for 24 hours, the wet weight (B [g]) of each test pieces is measured. A water absorption ratio is calculated by the following formula. The results are shown in Table 1.

$$\text{Water absorption ratio (\%)} = \{(B-A)/A\} \times 100$$

<Remaining Component>

Referring to FDA GUIDANCE DOCUMENT FOR CLASS III CONTACT LENSES APRIL 1989 p.18 "Leachable and residual monomers", one plate having a diameter of 12 mm and a thickness of 0.5 mm is extracted by 5 mL of acetonitrile at 50°C for 72 hours. By using a high-speed liquid chromatography (HPLC; high-speed liquid chromatograph: 2695 separation module manufactured by WATERS Ltd.; detector: Photodiode Array Detector 996 manufactured by WATERS Ltd.; column: Develosil ODS HG-5 Length 250 mm × I.D. 4.6 mm, manufactured by Nomura Chemical Co., Ltd.), the concentration of each unpolymerized monomer component in the acetonitrile extraction solution is determined by the analytical curve produced from a standard solution of each copolymerizing component, and the residual amount of the unpolymerized monomer component is calculated by the following formula. In the analysis condition of HPLC, the initial set value of a mobile phase is set to be acetonitrile/distilled water =30/70, and the composition of a mobile phase is continuously changed at the same time as initiation of the measurement (linear gradient), and the set value after 30 minutes is set to be acetonitrile/distilled water =100/0. The set value was maintained at acetonitrile / distilled water =100/0 until the analysis is terminated. A detection wavelength, a flow rate, an oven temperature and an amount to be charged are respectively set to be 210 nm, 1.0 mL/minute, 40°C and 20 μL.

$$\text{Residual amounts (\% by weight) of each unpolymerized monomer component} = \text{concentration of each unpolymerized monomer component in acetonitrile extraction solution } (10^{-6}\ g/mL) \times 5(mL)/\text{plate weight (g))} \times 100$$

<Hardness>

Rockwell Superficial Hardness tester manufactured by Akashi Seisakusho Co., Ltd. is used, and the test pieces having a diameter of 12.0 mm and a thickness of 4.0 mm are measured by a load of 30 kg and 1/4 inches (about 0.64 cm) of an indenter in a thermohygrostat room with a temperature of 25°C and a relative humidity of 50%.

<Processability>

A test piece having a CL shape was processed by using a cutting machine using a diamond tool. Processability and the surface state of the sample piece after the process are visually observed, and evaluated based on the following evaluation criteria.

(Evaluation criteria)

○: The lens can be easily processed and Polished
Δ: The lens is processable, but a slight scuffing is caused
× : Scuffing like chipping is significant, and the lens is difficult to be processed

<Flaw>

After polishing both faces of the obtained test piece and rubbing the faces with cloth or tissue paper, the surface state of the test piece is visually observed, and evaluated based on the following evaluation criteria.

(Evaluation criteria)

○: Flaw is hardly observed
Δ: Some flaws are observed
×: A lot of flaws are observed (even if the surfaces are rubbed with weak force, the surfaces are easily damaged).

<Shape Stability>

The polymerized copolymer in the shape of a button is processed with cutting, and a lens having a prescribed standard (base curve: 7.90 mm, power: -10.0D (diopter), lens diameter: 9.2 mm) is prepared. After the lens was stored under a severe condition of 40°C in a wet state (surfactant-containing CL care article) and in a dry state for six months, the base curve and the lens diameter were measured.

All the lenses obtained from the copolymers of Examples had fluctuation of the base curve and lens diameter of within 0.05 mm both in both the wet state and in the dry state.

<Overall Evaluation>

In the polymerization condition A in which the total polymerization time is within 3 hours, a copolymer having the total remaining components of at most 2 % by weight, Dk of at least 150, and the processability and the flaw of ○ is evaluated as ○, particularly, the copolymer having Dk of at least 180 is evaluated as ◎, and the other one is evaluated as ×.

Among copolymers evaluated as ◎, in order to improve the processability more, the copolymer having high hardness is selected, and Example 3 is the most preferable from that viewpoint.

TABLE 1

| Components-evaluation items etc | | Ex. | | | | | | | | | Com. Ex. | | | | |
|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 |
| TMSiSt(part by weight) | | 45 | 50 | 55 | 65 | 70 | | 55 | 45 | 60 | 45 | 55 | 55 | 40 | 75 |
| BTMSiSt | | | | | | | 60 | | | | | | | | |
| 3FEMA(part by weight) | | 45 | 35 | 35 | 30 | 20 | 30 | | | | 40 | 30 | 30 | 50 | 15 |
| 5FPMA | | | | | | | | 35 | | | | | | | |
| 6FIPMA | | | | | | | | | 45 | 30 | | | | | |
| MAA(part by weight) | | | | | | | | | | | 5 | 5 | 5 | | |
| Crosslinking agent (part by weight) | EDMA | 10 | 15 | 10 | 5 | | 10 | 10 | | | 10 | 10 | 10 | 10 | |
| | VBMA | | | | | 10 | | | 10 | 10 | | | | | 10 |
| Ultraviolet absorber (part by weight) | | | 0.25 | 0.25 | | | | | | | | 0.25 | 0.25 | | |
| Colorant(part by weight) | | | | 0.005 | | | | | | | | 0.005 | 0.005 | | |
| Polymerization initiator (part by weight) | | 0.3 | 0.3 | 0.3 | 0.3 | 0.3 | 0.3 | 0.3 | 0.3 | 0.3 | 0.3 | 0.3 | 0.3 | 0.3 | 0.3 |
| Polymerization condition | | A | A | A | A | A | A | A | A | A | A | A | B | A | A |
| Dk value (GTG) | | 152 | 170 | 198 | 230 | 276 | 167 | 235 | 215 | 272 | 136 | 172 | 170 | 108 | 291 |
| Water absorption (%) | | 0.06 | 0.05 | 0.06 | 0.06 | 0.05 | 0.06 | 0.05 | 0.07 | 0.07 | 0.5 | 0.4 | 0.4 | 0.05 | 0.04 |
| Remaining component (% by weight) | TMSiSt | 0.09 | 0.26 | 0.35 | 1.3 | 1.7 | | 0.01 | 0.002 | 0.66 | 1.1 | 3.8 | 2.3 | 0.12 | 2.6 |
| | BTMSiSt | | | | | | 1.0 | | | | | | | | |
| | 3FEMA | 0.28 | 0.06 | 0.06 | 0.01 | N.D | 0.07 | | | | 2.3 | 1.2 | 0.11 | 2.4 | N.D |
| | 5FPMA | | | | | | | 0.32 | | | | | | | |
| | 6FIPMA | | | | | | | | 0.39 | 0.28 | | | | | |
| | MAA | | | | | | | | | | 4.8 | 3.9 | 2.2 | | |
| | Crosslinking agent | N.D | N.D | N.D | N.D | N.D | N.D | N.D | N.D | N.D | 0.01 | 0.02 | N.D | N.D | N.D |
| | | 55 | 56 | 53 | 43 | 41 | 52 | 46 | 39 | 34 | 39 | 22 | 48 | 51 | 27 |
| Hardness (30X) Processability Flaw | | ○ | ○ | ○ | ○ | ○ | ○ | ○ | ○ | ○ | ○ | Δ | ○ | ○ | × |
| Overall evaluation | | ○ | ○ | ○ | ○ | ○ | ○ | ○ | ○ | ○ | ○ | × | Δ | ○ | × |
| | | ○ | ○ | ◎ | ◎ | ◎ | ○ | ◎ | ◎ | ◎ | × | × | × | × | × |

TMSiSt: tris (trimethylsfloxy) sflylstyrene

BTMSiSt: bis (trimethylsiloxy) methylsilylstyrene

(continued)

| Components-evaluation items etc | Ex. | | | | | | | | | Com. Ex. | | | | |
|---|---|---|---|---|---|---|---|---|---|---|---|---|---|---|
| | 1 | 2 | 3 | 4 | 5 | 6 | 7 | 8 | 9 | 1 | 2 | 3 | 4 | 5 |
| 3FEMA: trifluoroethyl methacrylate | | | | | | | | | | | | | | 5FPMA: 2,2,3,3,3-pentafluoropropyl methacrylate |
| 6FIPMA: hexafluoroisopropyl methacrylate | | | | | | | | | | | | | | MAA: methacrylic acid |
| EDMA: ethylene glycol dimethacrylate | | | | | | | | | | | | | | VBMA: 4-vinylbenzyl methacrylate |
| Ultraviolet absorber: 2-(5-chloro-2H-benzotriazole-2-yl)-6-(1,1-dimethylethyl)-4-methylphenol | | | | | | | | | | | | | | Polymerization initiator: 2,2'-azobis (2,4-dimethylvaleronitrile) |
| Colorant: D&C Green No.6 | | | | | | | | | | | | | | |
| N.D: less than detection limitation | | | | | | | | | | | | | | |

INDUSTRIAL APPLICABILITY

Since the CL material of the present invention is extremely small in an amount of remaining unpolymerized monomers, has excellent oxygen permeability and is low in water absorption ratio, the CL material is more excellent in safety and shape stability than ever before. Also, since the CL material has good processability and is also excellent in the shape stability, it becomes possible to make the thickness of the CL material thin, which leads to improvement in wearability.

The polymerization can be carried out in a short time by selectively using the monomer components (tris (trimethylsiloxy)silylstyrene and trifluoroethyl methacrylate) and the crosslinking agent which are excellent in copolymerizability. Furthermore, the amount of the unpolymerized monomers can be remarkably reduced, and the CL material has excellent oxygen permeability coefficient (Dk), and is more excellent in safety and shape stability than ever before. Also, since the CL material has good processability and is also excellent in the shape stability, it becomes possible to make the thickness of the CL material thin, which leads to improvement in wearability.

## Claims

1. A contact lens material comprising a copolymer obtained by polymerizing monomer components essentially consisting of 45 to 70 parts by weight of a silicon-containing monomer represented by the general formula (I):

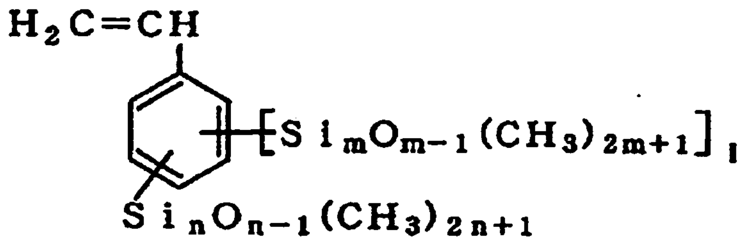

(I)

wherein 1 is 0 or 1, and n and m are an integer of 1 to 15,
and 20 to 45 parts by weight of an alkyl (meth)acrylate, wherein an alkyl group has 1 to 6 carbon atoms and at least one hydrogen atom in the alkyl group is substituted with a fluoride atom, and
5 to 15 parts by weight of a crosslinking agent.
wherein the total residual amount of an unpolymerized monomer component remaining in the copolymer based on the copolymer is at most 3.5 % by weight,
an oxygen permeability coefficient of the copolymer is at least 130 $\times$ $10^{-11}(cm^2/sec)\cdot(mLO_2)/(mL\cdot mmHg)$, and a water absorption ratio of the copolymer is at most 0.3 % by weight.

2. The contact lens material of Claim 1, wherein the copolymer further comprises an ultraviolet absorber and/or a colorant.

3. The contact lens material of any one of Claim 1, or 2, wherein the copolymer is obtained by polymerizing the monomer components and the crosslinking agent at 40 to 120°C for 30 minutes to 5 hours.

4. A contact lens comprising the contact lens material of any one of Claim 1, to 3.

5. A contact lens material, according to claim 1 comprising a copolymer obtained by polymerizing monomer components essentially consisting of tris(trimethylsiloxy)silylstyrene and trifluoroethyl methacrylate, and a crosslinking agent, wherein the amount of tris(trimethylsiloxy)silylstyrene is 45 to 70 parts by weight, the amount of trifluoroethyl methacrylate is 20 to 45 parts by weight, and the amount of the crosslinking agent is 5 to 15 parts by weight.

6. The contact lens material of Claim 5, wherein the crosslinking agent is ethylene glycol dimethacrylate and/or 4-vinylbenzyl methacrylate.

7. The contact lens material of Claim 5 or 6, wherein the copolymer further comprises an ultraviolet absorber and/or a colorant.

8. The contact lens material of any one of Claim 5, 6, or 7, wherein the copolymer is obtained by polymerizing the

monomer components and the crosslinking agent at 40 to 120°C for 30 minutes to 5 hours.

**9.** The contact lens material of any one of Claim 5, 6, 7, or 8, wherein residues of an unpolymerized monomer components in the copolymer based on the copolymer is at most 3.0 % by weight as for the tris(trimethylsiloxy)silylstyrene and at most 0.5 % by weight as for the trifluoroethyl methacrylate,
an oxygen permeability coefficient of the copolymer is at least 130 × $10^{-11}$(cm$^2$/sec)·(mLO$^2$)/(mL·mmHg), and
a water absorption ratio of the copolymer is at most 3.0 % by weight.

**10.** A contact lens comprising the contact lens material of any one of Claim 5, 6, 7, 8, or 9.

**Patentansprüche**

**1.** Kontaktlinsenmaterial, umfassend ein Copolymer, das durch Polymerisieren von Monomerkomponenten erhalten ist, die im Wesentlichen aus 45 bis 70 Gewichtsteilen eines Silikon-enthaltenden Monomers, das durch die allgemeine Formel (I) dargestellt ist:

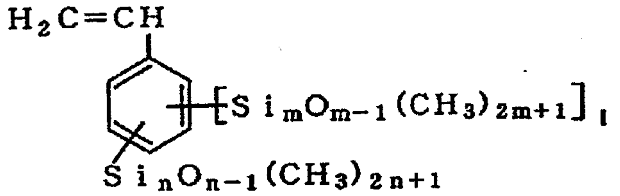
(I)

wobei I gleich 0 oder 1 ist, und m und n eine ganze Zahl von 1 bis 15 sind,
und 20 bis 45 Gewichtsteilen eines Alkyl(meth)acrylats, wobei eine Alkylgruppe 1 bis 6 Kohlenstoffatome aufweist und zumindest ein Wasserstoffatom in der Alkylgruppe durch ein Fluoratom substituiert ist, und
5 bis 15 Gewichtsteilen eines Vernetzungsagens, bestehen,
wobei der gesamte restliche Anteil einer unpolymerisierten Monomerkomponente, die in dem Copolymer übrig bleibt, basierend auf dem Copolymer höchstens 3,5 Gew.-% ist,
ein Sauerstoffpermeabilitätskoeffizient des Copolymers ist zumindest 130 x $10^{-11}$ (cm$^2$/Sek) • (mLO$_2$)/(mL•mm-Hg), und
ein Wasserabsorptionsverhältnis des Copolymers ist höchstens 0,3 Gew.-%.

**2.** Kontaktlinsenmaterial nach Anspruch 1, wobei das Copolymer ferner einen Ultraviolettabsorber und/oder einen Farbstoff umfasst.

**3.** Kontaktlinsenmaterial nach einem der Ansprüche 1 oder 2, wobei das Copolymer durch Polymerisieren der Monomerkomponenten und des Vernetzungsagens bei 40 bis 120°C für 30 Minuten bis 5 Stunden erhalten ist.

**4.** Kontaktlinse, umfassend das Kontaktlinsenmaterial nach einem der Ansprüche 1 bis 3.

**5.** Kontaktlinsenmaterial nach Anspruch 1, umfassend ein Copolymer, das durch Polymerisieren von Monomerkomponenten, die im Wesentlichen aus Tris(trimethylsiloxy)silylstyrol und Trifluorethylmethacrylat bestehen, und eines Vernetzungsagens erhalten ist,
wobei die Menge an Tris(trimethylsiloxy)silylstryol 45 bis 70 Gewichtsteile ist, die Menge an Trifluorethylmethacrylat 20 bis 45 Gewichtsteile ist und die Menge des Vernetzungsagens 5 bis 15 Gewichtsteile ist.

**6.** Kontaktlinsenmaterial nach Anspruch 5, wobei das Vernetzungsagens Ethylenglycoldimethacrylat und/oder 4-Vinylbenzylmethacrylat ist.

**7.** Kontaktlinsenmaterial nach Anspruch 5 oder 6, wobei das Copolymer ferner ein Ultraviolettabsorber und/oder einen Farbstoff umfasst.

**8.** Kontaktlinsenmaterial nach einem der Ansprüche 5, 6 oder 7, wobei das Copolymer durch Polymerisieren der Monomerkomponenten und des Vernetzungsagens bei 40 bis 120°C für 30 Minuten bis 5 Stunden erhalten ist.

**9.** Kontaktlinsenmaterial nach einem der Ansprüche 5, 6, 7 oder 8, wobei Reste von unpolymerisierten Monomerkomponenten in dem Copolymer basierend auf dem Copolymer höchstens 3 Gew.-% für das Tris(trimethylsiloxy)silylstyrol und höchstens 0,5 Gew.-% für das Trifluormethacrylat ist,
ein Sauerstoffpermeabilitätskoeffizient des Copolymers ist zumindest 130 x $10^{-11}$($cm^2$/Sek) • ($mLO^2$)/(mL • mmHg), und
ein Wasserabsorptionsverhältnis ist höchstens 3,0 Gew.-%.

**10.** Kontaktlinse, die das Kontaktlinsenmaterial nach einem der Ansprüche 5, 6, 7, 8 oder 9 umfasst.

## Revendications

**1.** Matériau pour lentille de contact comprenant un copolymère obtenu en polymérisant des composants monomères consistant essentiellement en 45 à 70 parties en poids d'un monomère contenant du silicium représenté par la formule générale (I) :

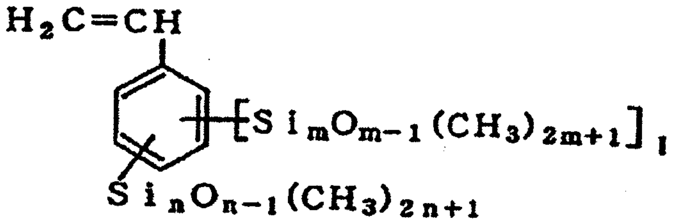

(I)

où l est 0 ou 1, et n et m sont un entier de 1 à 15,
et 20 à 45 parties en poids d'un (méth)acrylate d'alkyle, où un groupe alkyle a 1 à 6 atomes de carbone et au moins un atome d'hydrogène dans le groupe alkyle est substitué par un atome de fluor, et
5 à 15 parties en poids d'un agent réticulant,
où la quantité résiduelle totale d'un composant monomère non polymérisé restant dans le copolymère sur la base du copolymère est d'au plus 3,5 % en poids,
un coefficient de perméabilité à l'oxygène du copolymère est au moins 130 x $10^{-11}$ ($cm^2$/s).($mLO_2$)/(mL.mmHg), et
un taux d'absorption d'eau du copolymère est d'au plus 0,3 % en poids.

**2.** Matériau pour lentille de contact selon la revendication 1, où le copolymère comprend en outre un absorbeur d'ultraviolets et/ou une matière colorante.

**3.** Matériau pour lentille de contact selon l'une quelconque des revendications 1 ou 2, où le copolymère est obtenu en polymérisant les composants monomères et l'agent réticulant à 40 à 120°C pendant 30 minutes à 5 heures.

**4.** Lentille de contact comprenant le matériau pour lentille de contact selon l'une quelconque des revendications 1 à 3.

**5.** Matériau pour lentille de contact selon la revendication 1 comprenant un copolymère obtenu en polymérisant des composants monomères consistant essentiellement en tris(triméthylsiloxy)silylstyrène et méthacrylate de trifluoroéthyle, et un agent réticulant, où la quantité de tris(triméthylsiloxy)silylstyrène est 45 à 70 parties en poids, la quantité de méthacrylate de trifluoroéthyle est 20 à 45 parties en poids et la quantité d'agent réticulant est 5 à 15 parties en poids.

**6.** Matériau pour lentille de contact selon la revendication 5, où l'agent réticulant est le diméthacrylate d'éthylèneglycol et/ou le méthacrylate de 4-vinylbenzyle.

**7.** Matériau pour lentille de contact selon la revendication 5 ou 6, où le copolymère comprend en outre un absorbeur d'ultraviolets et/ou une matière colorante.

**8.** Matériau pour lentille de contact selon l'une quelconque des revendications 5, 6 ou 7, où le copolymère est obtenu en polymérisant les composants monomères et l'agent réticulant à 40 à 120°C pendant 30 minutes à 5 heures.

**9.** Matériau pour lentille de contact selon l'une quelconque des revendications 5, 6, 7 ou 8, où les résidus d'un composant

monomère non polymérisé dans le copolymère sur la base du copolymère est d'au plus 3,0 % en poids concernant le tris(triméthylsiloxy)silylstyrène et d'au plus 0,5 % en poids concernant le méthacrylate de trifluoroéthyle, un coefficient de perméabilité à l'oxygène du copolymère est d'au moins 130 x $10^{-11}$ ($cm^2$/s).($mLO_2$)/(mL.mmHg), et un taux d'absorption d'eau du copolymère est d'au plus 3,0 % en poids.

**10.** Lentille de contact comprenant le matériau pour lentille de contact selon l'une quelconque des revendications 5, 6, 7, 8 ou 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60142324 A
- JP 6027424 A
- JP 11326847 A